# EUROPEAN PATENT APPLICATION

(11) **EP 4 290 620 A1**
(43) Date of publication of application: **13.12.2023**
(21) Application number: 21934540.2
(22) Date of filing: 04.11.2021
(51) Int. Cl.: H01M 4/62, H01M 4/48, H01M 10/0525

(54) **COMPOSITE NEGATIVE ELECTRODE MATERIAL AND PREPARATION METHOD THEREFOR, AND LITHIUM ION BATTERY**

(30) Priority: 29.03.2021 CN 202110335383
(71) Applicant: BTR NEW MATERIAL GROUP CO., LTD., Shenzhen, Guangdong 518106 (CN)
(72) Inventor: PANG, Chunlei, Shenzhen, Guangdong 518106 (CN); LIANG, Tengyu, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2021/128547
(87) International publication number: WO 2022/205904

(57) **Abstract**

The present disclosure relates to the field of anode materials, and provides a composite anode material, a method for preparing the composite anode material, and a lithium-ion battery. The composite anode material includes a silicon-oxygen material and a carbon coating layer on a surface of the silicon-oxygen material. A physical adsorption-desorption isotherm of the composite anode material is of a type II or type III, and a physical adsorption-desorption isotherm of the silicon-oxygen material is of a type IV or type V. The composite anode material, the method for preparing the same, and the lithium-ion battery provided in the present disclosure can effectively improve rate performance and cycling stability of a lithium battery.

## Description

### CROSS REFERENCE TO RELATED APPLICATIONS

The present application claims priority to Chinese Patent Application No. 2021103353838, entitled "COMPOSITE ANODE MATERIAL, METHOD FOR PREPARING THE SAME, AND LITHIUM-ION BATTERY" and filed with the Chinese Patent Office on March 29, 2021, the entire contents of which are hereby incorporated by reference for all purposes.

### TECHNICAL FIELD

The present disclosure relates to the technical field of anode materials, and in particular, to a composite anode material, a method for preparing the composite anode material, and a lithium-ion battery.

### BACKGROUND

A silicon-carbon composite anode material is a new-type lithium battery anode material with a high capacity and a long cycle, which has a capacity much higher than that of graphite and a cycle better than that of metal silicon, and is an important next-generation lithium battery anode material today. Carbon in the silicon-carbon composite anode material may enhance conductivity and stabilize a structure of the material for a silicon-oxygen material system, making it have better cycling expansion performance. However, a structure of a carbon coating layer in an existing silicon-carbon composite material is not dense enough, and there are certain pores inside the silicon-carbon composite material, which leads to a limited improvement in conductivity of a silicon active material by the carbon coating layer, being not conducive to improving the capacity and first efficiency of the material. Moreover, material particles may be pulverized during lithium deintercalation and intercalation of active silicon, resulting in poor stability and poor cycling performance.

### SUMMARY

In view of this, the present disclosure proposes a composite anode material, a method for preparing the composite anode material, and a lithium-ion battery, which can improve cycling stability of the material.

In a first aspect, the present disclosure provides a composite anode material, in which the composite anode material includes a silicon-oxygen material and a carbon coating layer on a surface of the silicon-oxygen material. A physical adsorption-desorption isotherm of the composite anode material is of a type II or type III, and a physical adsorption-desorption isotherm of the silicon-oxygen material is of a type IV or type V

In the composite anode material provided in the present disclosure, the physical adsorption-desorption isotherm of the silicon-oxygen material is of the type IV or type V, so that the silicon-oxygen material and the carbon coating layer can be bonded more closely, which is conducive to electron conduction and ion conduction during lithium intercalation and deintercalation and is conducive to improving first efficiency, capacity, and cycling stability of the material. The physical adsorption-desorption isotherm of the composite anode material is of the type II or type III, so that the composite anode material has a dense structure, and the carbon coating layer has certain mechanical strength and a stable structure, which can ensure integrity of particles during lithium deintercalation and intercalation of active silicon, inhibit pulverization of the particles, improve stability of the silicon-oxygen material, and further improve cycling performance of the material as a whole.

In the present disclosure, classification of types of physical adsorption-desorption isotherms is based on a classification method for physical adsorption-desorption isotherms proposed by International Union of Pure and Applied Chemistry (IUPAC).

In a feasible embodiment, in a Raman spectrum, the composite anode material has a carbon characteristic peak D, a carbon characteristic peak G, and a silicon characteristic peak A, a ratio I_{D}/I_{G} of peak intensity I_{D} of the carbon characteristic peak D to peak intensity I_{G} of the carbon characteristic peak G ranges from 0.5 to 2, and a ratio of peak intensity I_{A} of the silicon characteristic peak A to (I_{D}+I_{G}) ranges from 0.1 to 10.

In a feasible embodiment, the composite anode material satisfies at least one of the following conditions a to e:
a. the silicon-oxygen material includes SiOₓ, where 0<x<2;
b. the silicon-oxygen material further includes a composite material of SiOₓ, the composite material of SiOₓ including at least one of a SiOₓ composite with SiO_{y}, a SiOₓ composite with SiO₂, a SiOₓ composite with LiₘSiOₙ, a SiOₓ composite with NaₘSiOₙ, a SiOₓ composite with KₘSiOₙ, a SiOₓ composite with MgₘSiOₙ, a SiOₓ composite with CaₘSiOₙ, a SiOₓ composite with AlₘSiOₙ, a SiOₓ composite with amorphous carbon, a SiOₓ composite with graphite, a SiOₓ composite with graphene, a SiOₓ composite with carbon nanotube, and a SiOx composite with a polymer material, where 0<y<2 and x≠y, m≥1, and n≥1;
c. a mass percentage of oxygen in the silicon-oxygen material ranges from 0.1% to 50%;
d. a silicon grain size in the silicon-oxygen material ranges from 1 nm to 100 nm;
e. a specific surface area of the silicon-oxygen material is smaller than 100 m²/g; and
f. a porosity ϕₐ of the silicon-oxygen material is smaller than 10%.

In a feasible embodiment, the composite anode material satisfies at least one of the following conditions a to e:
a. particles of the composite anode material are spherical or quasi-spherical, and a Wadell's sphericity factor thereof is greater than 0.01;
b. an average particle size of the composite anode material ranges from 1.0 µm to 50 µm;
c. a porosity of the composite anode material is smaller than 10%;
d. a specific surface area of the composite anode material ranges from 1 m²/g to 50 m²/g; and
e. a mass percentage of carbon in the composite anode material ranges from 0.1% to 50%.

In a second aspect, the present disclosure provides a method for preparing a composite anode material, in which the method includes the following steps:
feeding a first aliphatic hydrocarbon gas in a protective atmosphere, and preheating a silicon-oxygen material and the first aliphatic hydrocarbon gas, in which a physical adsorption-desorption isotherm of the silicon-oxygen material is of a type IV or type V; and
feeding a second aliphatic hydrocarbon gas by intermittent pulsing, and causing the second aliphatic hydrocarbon gas to undergo chemical vapor deposition on the preheated product, to obtain the composite anode material.

In the above solution, by preheating, the aliphatic hydrocarbon gas can be adsorbed in pores of particles of the silicon-oxygen material whose physical adsorption-desorption isotherm is of the type IV or type V, thereby filling pores of the silicon-oxygen material. The aliphatic hydrocarbon gas is fed by intermittent pulsing, which does not lead to excessive local deposition of carbon sources. The aliphatic hydrocarbon gas is decomposed into zero-dimensional single carbon atom radicals or one-dimensional shorter carbon chains during cracking, and mutual stacking may be denser, which is more conducive to formation of the dense structure and spherical or quasi-spherical particles of the composite anode material, is conducive to integrity of a conductive network and stability of the structure of the anode material, and is conducive to improving cycling stability of the composite anode material.

In a feasible embodiment, the preparation method satisfies at least one of the following conditions a to f:
a. the silicon-oxygen material includes SiOₓ, where 0<x<2;
b. the silicon-oxygen material further includes a composite material of SiOₓ, the composite material of SiOₓ includes at least one of a SiOₓ composite with SiO_{y}, a SiOₓ composite with SiO₂, a SiOₓ composite with LiₘSiOₙ, a SiOₓ composite with NaₘSiOₙ, a SiOₓ composite with KₘSiOₙ, a SiOₓ composite with MgₘSiOₙ, a SiOₓ composite with CaₘSiOₙ, a SiOₓ composite with AlₘSiOₙ, a SiOₓ composite with amorphous carbon, a SiOₓ composite with graphite, a SiOₓ composite with graphene, a SiOₓ composite with carbon nanotube, and a SiOx composite with a polymer material, where 0<y<2 and x≠y, m≥1, and n≥1;
c. a mass percentage of oxygen in the silicon-oxygen material ranges from 0.1% to 50%;
d. a silicon grain size in the silicon-oxygen material ranges from 1 nm to 100 nm;
e. a specific surface area of the silicon-oxygen material is smaller than 100 m²/g; and
f. a porosity ϕₐ of the silicon-oxygen material is smaller than 10%.

In a feasible embodiment, the preparation method satisfies at least one of the following conditions a to d:
a. the protective atmosphere includes at least one of nitrogen, helium, neon, argon, krypton, and xenon;
b. the first aliphatic hydrocarbon gas and the second aliphatic hydrocarbon gas each independently include at least one of acetylene, ethylene, propyne, ethane, and propylene;
c. a weight ratio A of a total mass of the second aliphatic hydrocarbon gas to the silicon-oxygen material satisfies the following relation: 1.5ϕₐ/(1-ϕₐ)≤A≤15ϕₐ/(1-ϕₐ), where ϕₐ denotes a porosity of the silicon-oxygen material; and
d. gas flow rates of the first aliphatic hydrocarbon gas and the second aliphatic hydrocarbon gas each independently range from 0.1 L/min to 5 L/min.

In a feasible embodiment, the preparation method satisfies at least one of the following conditions a to e:
a. a preheating temperature ranges from 100°C to 600°C;
b. a preheating time ranges from 0.5 h to 24 h;
c. a reaction temperature of the chemical vapor deposition ranges from 600°C to 1050°C;
d. the intermittent pulsing is at an interval of 8 s to 12 s; and
e. the intermittent pulsing has a pulse duration of 8 s to 1 min.

In a feasible embodiment, the method further includes:
cooling and sieving the composite anode material obtained by deposition so that an average particle size of the composite anode material ranges from 1.0 µm to 50 µm.

In a third aspect, the present disclosure provides a lithium-ion battery, in which the lithium-ion battery includes the composite anode material as described in the first aspect or the composite anode material obtained by a preparation method as described in the second aspect.

The technical solution of the present disclosure has at least the following beneficial effects.
1) According to the composite anode material provided in the present disclosure, the physical adsorption-desorption isotherm of the silicon-oxygen material is of the type IV or type V, so as to have more binding points with carbon and be more closely bonded with the carbon coating layer, which is conducive to electron conduction and ion conduction during lithium intercalation and deintercalation. The physical adsorption-desorption isotherm of the composite anode material is of the type II or type III, indicating that the composite anode material is relatively dense and has a stable structure, which can ensure integrity of the particles during lithium deintercalation and intercalation of the active silicon, inhibit pulverization of the particles, improve stability of the silicon-oxygen material, be conducive to a long cycle, and further improve cycling stability of finished batteries as a whole.
2) According to the method for preparing a composite anode material provided in the present disclosure, by preheating, the first aliphatic hydrocarbon gas can be adsorbed in pores of particles of the silicon-oxygen material whose physical adsorption-desorption isotherm is of the type IV or type V, thereby filling pores of the silicon-oxygen material. The second aliphatic hydrocarbon gas is fed by intermittent pulsing, which may not lead to excessive local deposition of carbon sources. The second aliphatic hydrocarbon gas is decomposed into zero-dimensional single carbon atom radicals or one-dimensional shorter carbon chains during cracking, and mutual stacking may be denser, which is more conducive to formation of the dense structure and spherical or quasi-spherical particles of the composite anode material, is conducive to integrity of a conductive network and stability of the structure of the anode material, and is conducive to improving cycling stability of the composite anode material. Moreover, the preparation method is simple and easy to operate, and a preparation process is safe and efficient; the manufacturing cost is effectively reduced, and is suitable for mass production. A prepared product is used as a battery pole piece, which is conducive to electron conduction and ion conduction during lithium intercalation and deintercalation and is conducive to improving cycling stability of the battery.

### BRIEF DESCRIPTION OF DRAWINGS

FIG. 1 is a flowchart of a method for preparing a composite anode material according to some embodiments of the present disclosure;
FIG. 2 is a schematic diagram of a physical adsorption-desorption isotherm of a composite anode material according to Example 1 of the present disclosure;
FIG. 3 is a schematic diagram of a physical adsorption-desorption isotherm of a silicon-oxygen material according to Example 1 of the present disclosure; and
FIG. 4 is a schematic diagram of a physical adsorption-desorption isotherm of a composite anode material according to Comparative Example 1 of the present disclosure.

### DESCRIPTION OF EMBODIMENTS

Preferred embodiments of the present disclosure are described below. It should be pointed out that, for those of ordinary skill in the art, some improvements and modifications can be made without departing from the principle of embodiments of the present disclosure. These improvements and modifications are also regarded as the protection scope of the embodiments of the present disclosure.

In a first aspect, the present disclosure provides a composite anode material. The composite anode material includes a silicon-oxygen material and a carbon coating layer on a surface of the silicon-oxygen material. A physical adsorption-desorption isotherm of the composite anode material is of a type II or type III, and a physical adsorption-desorption isotherm of the silicon-oxygen material is of a type IV or type V

In the present disclosure, classification of types of physical adsorption-desorption isotherms is based on a classification method for physical adsorption-desorption isotherms proposed by IUPAC.

In the above solution, according to the composite anode material provided in the present disclosure, the physical adsorption-desorption isotherm of the silicon-oxygen material is of the type IV or type V, so that the silicon-oxygen material and the carbon coating layer can be bonded more closely, which is conducive to electron conduction and ion conduction during lithium intercalation and deintercalation and is conducive to improving first efficiency, capacity, and cycling stability of the material. The physical adsorption-desorption isotherm of the composite anode material is of the type II or type III, so that the composite anode material has a dense structure, and the carbon coating layer has certain mechanical strength and a stable structure, which can ensure integrity of particles during lithium deintercalation and intercalation of the active silicon, inhibit pulverization of the particles, improve stability of the silicon-oxygen material, and further improve cycling performance of the material as a whole.

The following are preferred technical solutions of the present disclosure, but are not used as limitations on the technical solutions provided in the present disclosure. Through the following preferred technical solutions, technical objectives and beneficial effects of the present disclosure can be better implemented and achieved.

In some embodiments, the silicon-oxygen material includes SiOₓ, where 0<x<2. SiOₓ may be, for example, SiO_{0.5}, SiO_{0.5}, SiO_{0.9}, SiO, SiO_{1.1}, SiO_{1.2}, SiO_{1.5}, or the like. Preferably, the silicon-oxygen material is SiO. It can be understood that composition of SiOx is relatively complex, which may be understood as being formed by nano silicon uniformly dispersed in SiO₂.

In some embodiments, the silicon-oxygen material further includes a composite material of SiOₓ, and the composite material of SiOₓ includes at least one of a SiOₓ composite with SiO_{y}, a SiOₓ composite with SiO₂, a SiOₓ composite with LiₘSiOₙ, a SiOₓ composite with NaₘSiOₙ, a SiOₓ composite with KₘSiOₙ, a SiOₓ composite with MgₘSiOₙ, a SiOₓ composite with CaₘSiOₙ, a SiOₓ composite with AlₘSiOₙ, a SiOₓ composite with amorphous carbon, a SiOₓ composite with graphite, a SiOₓ composite with graphene, a SiOₓ composite with carbon nanotube, and a SiOx composite with a polymer material, where 0<y<2 and x≠y, m≥1, and n≥1.

In some embodiments, a silicon grain size in the silicon-oxygen material ranges from 1 nm to 100 nm, which may be, for example, 1 nm, 10 nm, 20 nm, 40 nm, 45 nm, 50 nm, 55 nm, 60 nm, 65 nm, 70 nm, 75 nm, 80 nm, 100 nm, or the like, but is not merely limited to the values listed. Other values not listed in this value range can also be used. It can be understood that the silicon grain size of the silicon-oxygen material is controlled within the above range, which is conducive to improving structural stability, thermal stability, and long-term cycling stability of the anode material. It is to be noted that the silicon grain size in the silicon-oxygen material is a half-peak width of a 28.6° Si(111) peak measured by an XRD spectrum, and calculated using a Scherrer formula.

In some embodiments, a mass percentage of oxygen in the silicon-oxygen material ranges from 0.1% to 50%, which may be, for example, 0.1%, 1%, 10%, 20%, 25%, 30%, 35%, 40%, 50%, or the like, but is not merely limited to the values listed. Other values not listed in this value range can also be used. When the content of oxygen in the silicon-oxygen material is excessively high, the capacity of the material decreases, first Coulombic efficiency decreases. When the content of oxygen in the silicon-oxygen material is excessively low, i.e., the content of silicon increases, it is easy to cause the material to expand easily during cycling, resulting in serious pulverization of the material.

In some embodiments, a specific surface area of the silicon-oxygen material is smaller than 100 m²/g, which may be, for example, 1.50 m²/g, 2.50 m²/g, 3.50 m²/g, 5.00 m²/g, 10 m²/g, 50 m²/g, 90 m²/g, or the like, but is not merely limited to the values listed. Other values not listed in this value range can be used. A specific surface area of the composite anode material is within the above range, which ensures processing performance of the material, is conducive to improving first efficiency of a lithium battery made of the anode material, and is conducive to improving cycling performance of the anode material.

In some embodiments, a porosity ϕₐ of the silicon-oxygen material is smaller than 10%, which may be, for example, 1%, 2%, 3%, 5%, 6%, 8%, 9%, or the like, but is not merely limited to the values listed. Other values not listed in this value range can also be used. When the porosity of the silicon-oxygen material is excessively high, it is not conducive to forming a composite material with a dense structure, and it is not conducive to improving cycling stability of the material. Preferably, the porosity of the silicon-oxygen material is 1%<ϕₐ<10%.

In some embodiments, the composite anode material is spherical or quasi-spherical, and a Wadell's sphericity factor thereof is greater than 0.01, which may be, for example, 0.02, 0.04, 0.08, 0.1, 0.15, 0.2, 0.25, 0.3, 0.5, 0.6, 0.8, 0.9, 0.95, 0.99, or the like, but is not merely limited to the values listed. Other values not listed in this value range can also be used. For example, the Wadell's sphericity factor of the composite anode material ranges from 0.1 to 0.3. When the Wadell's sphericity factor of the composite anode material is excessively low, the particles have poor stability, are easily pulverized during the cycle, and have an increased cycling expansion rate.

In some embodiments, a specific surface area of the composite anode material ranges from 1 m²/g to 50 m²/g, which may be, for example, 1 m²/g, 10 m²/g, 15 m²/g, 20 m²/g, 25 m²/g, 30 m²/g, 35 m²/g, 40 m²/g, 45 m²/g, 50 m²/g, or the like, but is not merely limited to the values listed. Other values not listed in this value range can also be used. A specific surface area of the composite anode material is within the above range, which ensures processing performance of the material, is conducive to improving first efficiency of a lithium battery made of the anode material, and is conducive to improving cycling performance of the anode material.

In some embodiments, an average particle size of the composite anode material ranges from 1.0 µm to 50 µm, which may be, for example, 1.0 µm, 2.0 µm, 3.0 µm, 4.0 µm, 5.0 µm, 10 µm, 15 µm, 20 µm, 30 µm, 50 µm, or the like. The average particle size of the composite anode material is controlled within the above range, which is conducive to improvement of the cycling performance of the anode material. Preferably, the average particle size of the composite anode material ranges from 1.0 µm to 10 µm. If the average particle size of the composite anode material is excessively large, the cycling performance of the material decreases, rate performance decreases, and first efficiency of the battery is reduced.

In some embodiments, a porosity of the composite anode material is smaller than 10%, which may be, for example, 0.5%, 1.0%, 2.0%, 3%, 4%, 5%, 6%, 7%, 8%, 9%, 9.9%, or the like, but is not merely limited to the values listed. Other values not listed in this value range can also be used. The porosity of the composite anode material is controlled within the above range, enabling the material to have good rate performance.

In some embodiments, a mass percentage of carbon in the composite anode material ranges from 0.1% to 50%, which may be, for example, 0.1%, 3.0%, 5.0%, 10.0%, 15.5%, 20%, 30%, 50%, or the like, but is not merely limited to the values listed. Other values not listed in this value range can also be used. If the content of carbon is excessively high, transmission efficiency of lithium ions may be reduced, which is not conducive to high-rate charge and discharge of the material and degrades overall performance of the anode material. If the content of carbon is excessively low, it is not conducive to improving conductivity of the anode material and volume expansion inhibition performance of the material is relatively poor, resulting in poor long-cycling performance. Preferably, the mass percentage of carbon in the composite anode material ranges from 1% to 10%.

In some embodiments, in a Raman spectrum, the composite anode material has a carbon characteristic peak D, a carbon characteristic peak G, and a silicon characteristic peak A, and a ratio I_{D}/I_{G} of peak intensity I_{D} of the carbon characteristic peak D to peak intensity I_{G} of the carbon characteristic peak G ranges from 0.5 to 2, which may be, for example, 0.5, 0.8, 1.0, 1.2, 1.5, 1.8, 2.0, or the like. When the ratio I_{D}/I_{G} is excessively large, the first efficiency of the composite anode material is reduced. When the ratio I_{D}/I_{G} is excessively small, the rate performance of the composite anode material decreases. When the value of I_{D}/I_{G} is within this range, it indicates that a carbon layer is formed by cracking a carbon chain, and it is not easy to generate a graphite sheet layer.

In some embodiments, a ratio of peak intensity I_{A} of the silicon characteristic peak A to (I_{D}+I_{G}) ranges from 0.1 to 10, which may be, for example, 0.1, 0.2, 0.3, 0.5, 0.6, 0.8, 1.0, or the like. When the ratio I_{A}/(I_{D}+I_{G}) is excessively large, the cycling performance of the composite anode material decreases. When the ratio I_{A}/(I_{D}+I_{G}) is excessively small, a discharge specific capacity of the composite anode material is reduced, which is not conducive to improving energy density of the battery. When the value of I_{A}/(I_{D}+I_{G}) is within this range, the carbon coating layer is dense, and silicon is not easily exposed outside the carbon layer.

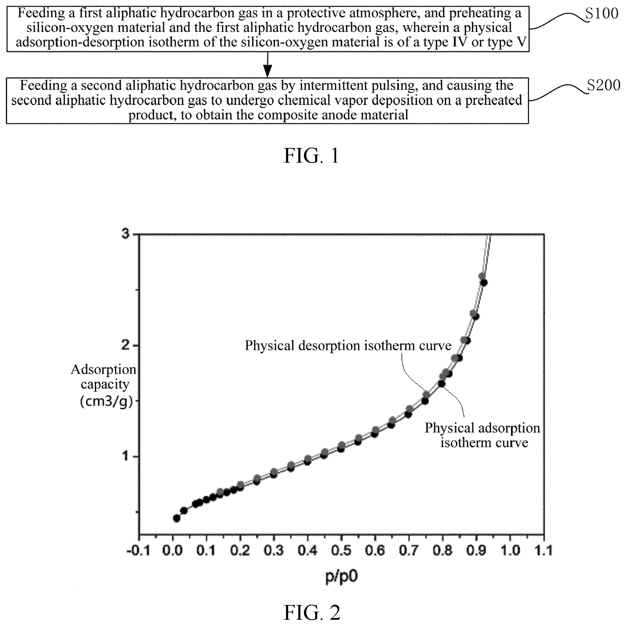

In a second aspect, as shown in FIG. 1, the present disclosure provides a method for preparing a composite anode material, which includes the following steps.

In step S 100, a first aliphatic hydrocarbon gas is fed in a protective atmosphere, and a silicon-oxygen material and the first aliphatic hydrocarbon gas are preheated, in which a physical adsorption-desorption isotherm of the silicon-oxygen material is of a type IV or type V

In step S200, a second aliphatic hydrocarbon gas is fed by intermittent pulsing, and the second aliphatic hydrocarbon gas is caused to undergo chemical vapor deposition on the preheated product, to obtain the composite anode material.

In the above solution, by preheating, the first aliphatic hydrocarbon gas can be adsorbed in pores of particles of the silicon-oxygen material whose physical adsorption-desorption isotherm is of the type IV or type V, thereby filling pores of the silicon-oxygen material. The physical adsorption-desorption isotherm of the silicon-oxygen material is of the type IV or type V, which is more conducive to deposition of the first aliphatic hydrocarbon gas in the pores. The second aliphatic hydrocarbon gas is fed by intermittent pulsing, which may not lead to excessive local deposition of carbon sources. The second aliphatic hydrocarbon gas is decomposed into zero-dimensional single carbon atom radicals or one-dimensional shorter carbon chains during cracking, and mutual stacking may be denser, which is more conducive to formation of the dense structure and spherical or quasi-spherical particles of the composite anode material, is conducive to integrity of a conductive network and stability of the structure of the anode material, and is conducive to improving cycling stability of the composite anode material.

The preparation method provided in the solution is described in detail below.

In step S 100, a first aliphatic hydrocarbon gas is fed in a protective atmosphere, and a silicon-oxygen material and the first aliphatic hydrocarbon gas are preheated.

In some embodiments, the silicon-oxygen material includes SiOₓ, where 0<x<2. SiOₓ may be, for example, SiO_{0.5}, SiO_{0.5}, SiO_{0.9}, SiO, SiO_{1.1}, SiO_{1.2}, SiO_{1.5}, or the like. Preferably, the silicon-oxygen material is SiO. It can be understood that composition of SiOx is relatively complex, which may be understood as being formed by nano silicon uniformly dispersed in SiO₂.

In some embodiments, the silicon-oxygen material further includes a composite material of SiOₓ, and the composite material of SiOₓ includes at least one of a SiOₓ composite with SiO_{y}, a SiOₓ composite with SiO₂, a SiOₓ composite with LiₘSiOₙ, a SiOₓ composite with NaₘSiOₙ, a SiOₓ composite with KₘSiOₙ, a SiOₓ composite with MgₘSiOₙ, a SiOₓ composite with CaₘSiOₙ, a SiOₓ composite with AlₘSiOₙ, a SiOₓ composite with amorphous carbon, a SiOₓ composite with graphite, a SiOₓ composite with graphene, a SiOₓ composite with carbon nanotube, and a SiOₓ composite with a polymer material, where 0<y<2 and x≠y, m≥1, and n≥1.

In some embodiments, a silicon grain size in the silicon-oxygen material ranges from 1 nm to 100 nm, which may be, for example, 1 nm, 10 nm, 20 nm, 40 nm, 45 nm, 50 nm, 55 nm, 60 nm, 65 nm, 70 nm, 75 nm, 80 nm, 100 nm, or the like, but is not merely limited to the values listed. Other values not listed in this value range can also be used. It can be understood that the silicon grain size of the silicon-oxygen material is controlled within the above range, which is conducive to improving structural stability, thermal stability, and long-term cycling stability of the anode material. It is to be noted that the silicon grain size in the silicon-oxygen material is a half-peak width of a 28.6° Si(111) peak measured by an XRD spectrum, and calculated using a Scherrer formula.

In some embodiments, a mass percentage of oxygen in the silicon-oxygen material ranges from 0.1% to 50%, which may be, for example, 0.1%, 1%, 10%, 20%, 25%, 30%, 35%, 40%, 50%, or the like, but is not merely limited to the values listed. Other values not listed in this value range can also be used. When the content of oxygen in the silicon-oxygen material is excessively high, the capacity of the material decreases, first Coulombic efficiency decreases. When the content of oxygen in the silicon-oxygen material is excessively low, i.e., the content of silicon increases, it is easy to cause the material to expand easily during a cycle, resulting in serious pulverization of the material.

In some embodiments, a specific surface area of the silicon-oxygen material is smaller than 100 m²/g, which may be, for example, 1.50 m²/g, 2.50 m²/g, 3.50 m²/g, 5.00 m²/g, 10 m²/g, 50 m²/g, 100 m²/g, or the like, but is not merely limited to the values listed. Other values not listed in this value range can also be used. A specific surface area of the composite anode material is within the above range, which ensures processing performance of the material, is conducive to improving first efficiency of a lithium battery made of the anode material, and is conducive to improving cycling performance of the anode material.

In some embodiments, a porosity ϕa of the silicon-oxygen material is smaller than 10%, which may be, for example, 1%, 2%, 3%, 5%, 6%, 8%, 10%, or the like, but is not merely limited to the values listed. Other values not listed in this value range can also be used. When the porosity of the silicon-oxygen material is excessively high, it is not conducive to forming a composite material with a dense structure, and it is not conducive to improving cycling stability of the material.

In some embodiments the protective atmosphere includes at least one of nitrogen, helium, neon, argon, krypton, and xenon. Heat treatment in the protective atmosphere can improve safety of a reaction.

In some embodiments, the first aliphatic hydrocarbon gas includes at least one of acetylene, ethylene, propyne, ethane, and propylene.

In some embodiments, a gas flow rate of the first aliphatic hydrocarbon gas ranges from 0.1 L/min to 5 L/min, which may be, for example, 0.1 L/min, 0.5 L/min, 1 L/min, 1.5 L/min, 2 L/min, 2.5 L/min, 3 L/min, 3.5 L/min, 5 L/min, or the like, but is not merely limited to the values listed. Other values not listed in this value range can also be used.

In some embodiments, a preheating temperature ranges from 100°C to 600°C, which may be, for example, 100°C, 200°C, 300°C, 350°C, 400°C, 450°C, 500°C, 550°C, 600°C, or the like, but is not merely limited to the values listed. Other values not listed in this value range can also be used. A preheating time ranges from 0.5 h to 24 h, which may be, for example, 0.5 h, 1.0 h, 1.5 h, 3 h, 5 h, 6 h, 8 h, 12 h, 15 h, 18 h, 24 h, or the like. It can be understood that, by sufficient preheating, the first aliphatic hydrocarbon gas can be adsorbed into the pores of the silicon-oxygen material and onto a surface thereof, which is conducive to formation of a dense carbon coating layer. Preferably, the preheating temperature ranges from 400°C to 600°C, and the preheating time ranges from 1 h to 5 h.

In step S200, a second aliphatic hydrocarbon gas is fed by intermittent pulsing, and the second aliphatic hydrocarbon gas is caused to undergo chemical vapor deposition on the preheated product, to obtain the composite anode material.

The second aliphatic hydrocarbon gas is decomposed into zero-dimensional single carbon atom radicals or one-dimensional shorter carbon chains during cracking, and mutual stacking may be denser, which is more conducive to formation of the composite anode material with a dense structure, is conducive to integrity of a conductive network and stability of the structure of the anode material, and is conducive to improving cycling stability of the composite anode material. A conventional solid-phase carbon source, such as an organic matter containing aromatic rings or higher aliphatic hydrocarbons with a boiling point generally higher than a decomposition point, is decomposed into two-dimensional carbon rings or long carbon chains during cracking, and mutual stacking is not as dense as zero-dimensional single carbon atom radicals or one-dimensional shorter carbon chains, and a physical adsorption-desorption isotherm obtained by pore-size analysis has a hysteresis loop. An aromatic hydrocarbon gas, such as benzene vapor, becomes two-dimensional carbon rings after cracking, stacking thereof is not as dense as one-dimensional short carbon chains or zero-dimensional carbon atoms, and a physical adsorption-desorption isotherm obtained by pore-size analysis has a hysteresis loop, which is not conducive to maintaining cycling stability of the anode material.

In some embodiments, a weight ratio A of the second aliphatic hydrocarbon gas to the silicon-oxygen material satisfies the following relation: 1.5ϕₐ/(1-ϕₐ)<A<15ϕₐ/(1-ϕₐ), where ϕₐ denotes a porosity of the silicon-oxygen material. An appropriate amount of the second aliphatic hydrocarbon gas is fed, which is conducive to deposition and formation of a uniform carbon coating layer on a surface of the silicon-oxygen material and enables the silicon-oxygen material wrapped by the carbon coating layer to form a dense structure and reduce the porosity of the silicon-oxygen material.

In some embodiments, the second aliphatic hydrocarbon gas includes at least one of acetylene, ethylene, propyne, ethane, and propylene.

In some embodiments, a gas flow rate of the second aliphatic hydrocarbon gas ranges from 0.1 L/min to 5 L/min, which may be, for example, 0.1 L/min, 0.5 L/min, 1 L/min, 1.5 L/min, 2 L/min, 2.5 L/min, 3 L/min, 3.5 L/min, 5 L/min, or the like, but is not merely limited to the values listed. Other values not listed in this value range can also be used.

In some embodiments, a reaction temperature of the chemical vapor deposition ranges from 600°C to 1050°C, which may be, for example, 600°C, 700°C, 800°C, 850°C, 900°C, 950°C, 1000°C, 1050°C, or the like, but is not merely limited to the values listed. Other values not listed in this value range can also be used. It can be understood that, by the chemical vapor deposition, the second aliphatic hydrocarbon gas is decomposed into zero-dimensional single carbon atom radicals or one-dimensional shorter carbon chains during cracking, and mutual stacking may be denser, which is more conducive to formation of the composite anode material with a dense structure, is conducive to integrity of a conductive network and stability of the structure of the anode material, and is conducive to improving cycling stability of the composite anode material. Preferably, the reaction temperature of the chemical vapor deposition ranges from 800°C to 1000°C.

In some embodiments, during the chemical vapor deposition, the aliphatic hydrocarbon gas is continuously fed by intermittent pulsing, and an interval of the intermittent pulsing is 8 s to 12 s.

In some embodiments, the intermittent pulsing has a pulse duration of 8 s to 1 min. The pulse duration can be that the aliphatic hydrocarbon gas is fed for 10 s every 10 s by pulsing. The carbon source gas (the second aliphatic hydrocarbon gas) is fed by the intermittent pulsing, which is not easy to cause excessive local deposition of the carbon source on the surface of the silicon-oxygen material, is conducive to improving uniformity of the carbon coating layer on the surface of the silicon-oxygen material, and is conducive to formation of a uniform and dense carbon coating layer. If the second aliphatic hydrocarbon gas is continuously fed, it is not conducive to formation of a structure in which the physical adsorption-desorption isotherm of the composite anode material is of a type II or type III, and is not conducive to improving the cycling stability of the anode material.

In some embodiments, subsequent to step S200, the method further includes:
cooling and sieving the composite anode material obtained by deposition so that an average particle size of the composite anode material ranges from 1.0 µm to 50 µm, which may be, for example, 1 µm, 5 µm, 10 µm, 15 µm, 20 µm, 30 µm, 40 µm, 50 µm, or the like. The average particle size of the composite anode material is controlled within the above range, which is conducive to improvement of the cycling performance of the anode material. Preferably, the average particle size of the composite anode material ranges from 1 µm to 10 µm.

In some embodiments, the sieving includes at least one of crushing, ball milling, screening, or classification.

In a third aspect, the present disclosure provides a lithium-ion battery, in which the lithium-ion battery includes the composite anode material as described in the first aspect or the composite anode material obtained by a preparation method as described in the second aspect.

The embodiments of the present disclosure are further described below with some Examples. The Examples of the present disclosure are not limited to the following specific Examples, and can be properly modified for implementation within the protection scope.

### Example 1

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ for 10 s every 10 s after the rotary furnace is heated up to 800°C; in which a total amount of feeding of C₂H₂ is controlled to 100 g by flowmeter reading and time; and
(4) cooling and taking out a sample after the reaction, and breaking the sample by using a crusher, to obtain the composite anode material.

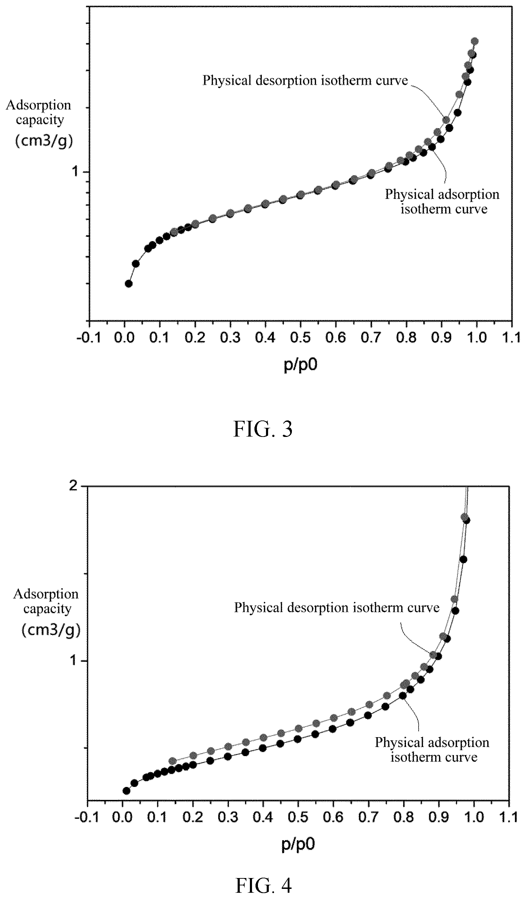

The composite anode material S 1 prepared in this Example includes a silicon-oxygen material and a carbon coating layer on a surface of the silicon-oxygen material. A physical adsorption-desorption isotherm of the composite anode material is as shown in FIG. 2, from which it can be seen that the physical adsorption-desorption isotherm thereof is of a type II. After burning and removal of carbon in the composite anode material, a physical adsorption-desorption isotherm of the silicon-oxygen material measured is as shown in FIG. 3, from which it can be seen that the physical adsorption-desorption isotherm thereof is of a type IV

### Example 2

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₃H₆ to treat for 2 h;
(3) feeding C₃H₆ for 10 s every 10 s after the rotary furnace is heated up to 800°C; in which a total amount of feeding of C₃H₆ is controlled to 100 g by flowmeter reading and time; and
(4) cooling and taking out a sample after the reaction, and breaking the sample by using a crusher, to obtain the composite anode material.

The composite anode material S2 prepared in this Example includes a silicon-oxygen material and a carbon coating layer on a surface of the silicon-oxygen material.

### Example 3

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type V;
(2) placing the SiO material in a rotary furnace A, feeding an Ar protective gas into the rotary furnace A, raising a temperature to 300°C, and feeding C₃H₄ to treat for 2 h;
(3) feeding C₃H₄ for 10 s every 10 s after the rotary furnace is heated up to 800°C; in which a total amount of feeding of C₃H₄ is controlled to 100 g by flowmeter reading and time; and
(4) cooling and taking out a sample after the reaction, and breaking the sample by using a crusher, to obtain the composite anode material.

The composite anode material S3 prepared in this Example includes a silicon-oxygen material and a carbon coating layer on a surface of the silicon-oxygen material.

### Example 4

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 300°C, and feeding C₂H₂ to treat for 12 h;
(3) feeding C₂H₂ for 10 s every 10 s after the rotary furnace is heated up to 800°C; in which a total amount of feeding of C₂H₂ is controlled to 100 g by flowmeter reading and time; and
(4) cooling and taking out a sample after the reaction, and breaking the sample by using a crusher, to obtain the composite anode material.

The composite anode material S4 prepared in this Example includes a silicon-oxygen material and a carbon coating layer on a surface of the silicon-oxygen material.

### Example 5

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ for 10 s every 10 s after the rotary furnace is heated up to 800°C; in which a total amount of feeding of C₂H₂ is controlled to 200 g by flowmeter reading and time; and
(4) cooling and taking out a sample after the reaction, and breaking the sample by using a crusher, to obtain the composite anode material.

The composite anode material S5 prepared in this Example includes a silicon-oxygen material and a carbon coating layer on a surface of the silicon-oxygen material.

### Example 6

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ for 10 s every 10 s after the rotary furnace is heated up to 800°C; in which a total amount of feeding of C₂H₂ is controlled to 1000 g by flowmeter reading and time; and
(4) cooling and taking out a sample after the reaction, and breaking the sample by using a crusher, to obtain the composite anode material.

The composite anode material S6 prepared in this Example includes a silicon-oxygen material and a carbon coating layer on a surface of the silicon-oxygen material.

### Example 7

A method for preparing a composite anode material includes the following steps:
(1) obtaining a SiO_{0.8} material by vacuum deposition reaction of Si and SiO₂, and then selecting a 950 g of SiO_{0.8} material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ for 10 s every 10 s after the rotary furnace is heated up to 800°C; in which a total amount of feeding of C₂H₂ is controlled to 100g by flowmeter reading and time; and
(4) cooling and taking out a sample after the reaction, and breaking the sample by using a crusher, to obtain the composite anode material.

The composite anode material S7 prepared in this Example includes a silicon-oxygen material and a carbon coating layer on a surface of the silicon-oxygen material.

### Example 8

A method for preparing a composite anode material includes the following steps:
(1) obtaining a SiO_{1.5} material by vacuum deposition reaction of Si and SiO₂, and then selecting a 950 g of SiO_{1.5} material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ for 10 s every 10 s after the rotary furnace is heated up to 800°C; in which a total amount of feeding of C₂H₂ is controlled to 100 g by flowmeter reading and time; and
(4) cooling and taking out a sample after the reaction, and breaking the sample by using a crusher, to obtain the composite anode material.

The composite anode material S8 prepared in this Example includes a silicon-oxygen material and a carbon coating layer on a surface of the silicon-oxygen material.

### Example 9

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ for 10 s every 10 s after the rotary furnace is heated up to 800°C; in which a total amount of feeding of C₂H₂ is controlled to 75 g by flowmeter reading and time; and
(4) cooling and taking out a sample after the reaction, and breaking the sample by using a crusher, to obtain the composite anode material.

The composite anode material S9 prepared in this Example includes a silicon-oxygen material and a carbon coating layer on a surface of the silicon-oxygen material.

### Example 10

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₃H₄ to treat for 2 h;
(3) feeding C₂H₂ for 10 s every 10 s after the rotary furnace is heated up to 800°C; in which a total amount of feeding of C₂H₂ is controlled to 100 g by flowmeter reading and time; and
(4) cooling and taking out a sample after the reaction, and breaking the sample by using a crusher, to obtain the composite anode material.

The composite anode material S10 prepared in this Example includes a silicon-oxygen material and a carbon coating layer on a surface of the silicon-oxygen material.

### Comparative Example 1

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type II;
(2) placing the SiO material in a rotary furnace A, feeding an Ar protective gas into the rotary furnace A, raising a temperature to 500°C, and feeding benzene vapor C₆H₆ to treat for 2 h;
(3) feeding C₆H₆ for 10 s every 10 s after the rotary furnace is heated up to 800°C; in which a total amount of feeding of C₆H₆ is controlled to 100 g by flowmeter reading and time; and
(4) cooling and taking out a sample after the reaction, and breaking the sample by using a crusher, to obtain the composite anode material.

The composite anode material D1 prepared in this Comparative Example includes a silicon-oxygen material and a carbon coating layer on a surface of the silicon-oxygen material. A physical adsorption-desorption isotherm of the composite anode material is as shown in FIG. 4, and the physical adsorption-desorption isotherm thereof is of a type IV

### Comparative Example 2

A method for preparing a composite anode material includes the following steps:
(1) obtaining a SiO material by vacuum deposition reaction of Si and SiO₂, and then selecting a 950 g of SiO material with porosity of 5% and a physical adsorption-desorption isotherm of a type IV;
(2) placing the SiO material in a rotary furnace A, feeding an Ar protective gas into the rotary furnace A, raising a temperature to 500°C, and feeding C₂H₂ to treat for 2 h;
(3) feeding C₂H₂ continuously after the rotary furnace is heated up to 800°C; wherein a total amount of feeding of C₂H₂ is controlled to 100g by flowmeter reading and time; and
(4) cooling and taking out a sample after the reaction, and breaking the sample by using a crusher, to obtain the composite anode material.

The composite anode material D2 prepared in this Comparative Example includes a silicon-oxygen material and a carbon coating layer on a surface of the silicon-oxygen material. A physical adsorption-desorption isotherm of the composite anode material D2 is of a type IV

### Performance parameter test

1. The composite anode materials prepared in the above Examples and Comparative Examples are respectively measured by using an oxygen/nitrogen/hydrogen analyzer to obtain the content of oxygen of the silicon-oxygen material after carbon removal as shown in Table 1.
2. The composite anode materials prepared in the above Examples and Comparative Examples are respectively measured by using a laser particle size analyzer to obtain average particle sizes of the composite anode materials as shown in Table 1.
3. The composite anode materials prepared in the above Examples and Comparative Examples are respectively measured by using a BET nitrogen absorption specific surface area meter to obtain specific surface areas of the materials as shown in Table 1.
4. Waddell's sphericity of material particles is calculated respectively by using the measured specific surface areas and average particle sizes of the composite anode materials prepared in the above Examples and Comparative Examples to obtain specific values as shown in Table 1.
5. The composite anode materials prepared in the above Examples and Comparative Examples are respectively tested in terms of pore size distribution of the composite anode materials within a pore size range of 1.7 nm to 300 nm by using a nitrogen adsorption pore size analyzer, to obtain physical adsorption-desorption isotherms and porosity, whether the physical adsorption-desorption isotherm has a hysteresis loop when p/p0 is in a range of 0 to 1, and types of the physical adsorption-desorption isotherms as shown in Table 1.
6. The composite anode materials prepared in the above Examples and Comparative Examples are respectively measured by using a Raman spectrometer to obtain Raman spectrums. In the Raman spectrums, the composite anode materials each have a carbon characteristic peak D, a carbon characteristic peak G, and a silicon characteristic peak A, and a ratio I_{D}/I_{G} of peak intensity I_{D} of the carbon characteristic peak D to peak intensity I_{G} of the carbon characteristic peak G and a ratio of peak intensity I_{A} of the silicon characteristic peak A to (I_{D}+I_{G}) are as shown in Table 1.
7. The composite anode materials prepared in the above Examples and Comparative Examples are analyzed by using an X-ray diffraction analyzer, and Si characteristic peaks can be observed, Si(111) peaks at 28° to 30° are fitted, and then particle sizes of silicon-oxygen materials are calculated by using a Scherrer formula, as shown in Table 1.
8. The composite anode materials prepared in the above Examples and Comparative Examples are analyzed by using a trace carbon analyzer, to obtain mass percentages of carbon in the composite anode materials as shown in Table 1.
9. The composite anode materials prepared in the above Examples and Comparative Examples are respectively placed in a 300-degree air-atmosphere electric furnace for treatment until a constant weight is reached, and are measured by using the trace carbon analyzer, to obtain silicon-oxygen materials after carbon removal treatment when the content of carbon is smaller than 0.1%. Pore size distribution of the silicon-oxygen materials within a pore size range of 1.7 nm to 300 nm is tested by using the nitrogen adsorption pore size analyzer, to obtain physical adsorption-desorption isotherms and porosity, whether the physical adsorption-desorption isotherm has a hysteresis loop when p/p0 is in a range of 0 to 1, and types of the physical adsorption-desorption isotherms as shown in Table 1.
10. The silicon-oxygen materials after carbon removal treatment are respectively measured by using the BET nitrogen absorption specific surface area meter to obtain specific surface areas of the materials as shown in Table 1.
11. The silicon-oxygen materials after carbon removal treatment are respectively measured by using the oxygen/nitrogen/hydrogen analyzer to obtain the content of oxygen of the silicon-oxygen material as shown in Table 1.
12. The composite anode materials prepared above are respectively treated with a mixed acid composed of excess hydrofluoric acid and concentrated nitric acid, when the mixed acid is added continuously and stood for 30 min and a reddish-brown gas is not released, the materials are suction-filtered and dried, and treated materials obtained are carbon coating layers. Pore size distribution of the carbon coating layers within a pore size range of 1.7 nm to 300 nm is tested by using the nitrogen adsorption pore size analyzer, to obtain physical adsorption-desorption isotherms and porosity, whether the physical adsorption-desorption isotherm has a hysteresis loop when p/p0 is in a range of 0 to 1, and types of the physical adsorption-desorption isotherms as shown in Table 1.
13. The carbon coating layers prepared above undergo a charge and discharge test to obtain charge and discharge capacities of the carbon coating layers as shown in Table 1.
14. The carbon coating layers prepared above are measured respectively by using the Raman spectrometer to obtain Raman spectrums. In the Raman spectrums, the carbon coating layers each have a carbon characteristic peak D and a carbon characteristic peak G, and a ratio I_{D}/I_{G} of peak intensity I_{D} of the carbon characteristic peak D to peak intensity I_{G} of the carbon characteristic peak G is as shown in Table 1.

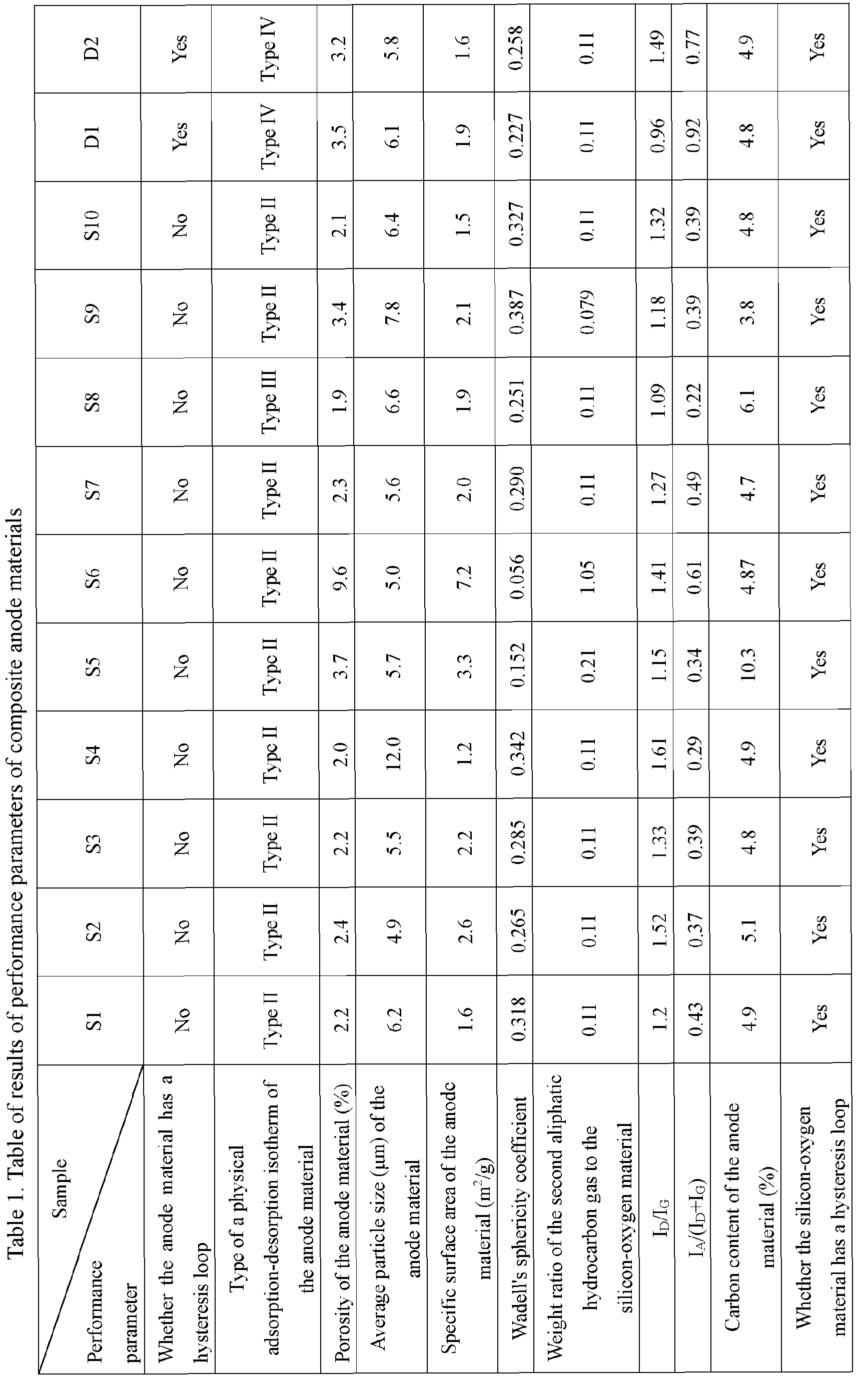

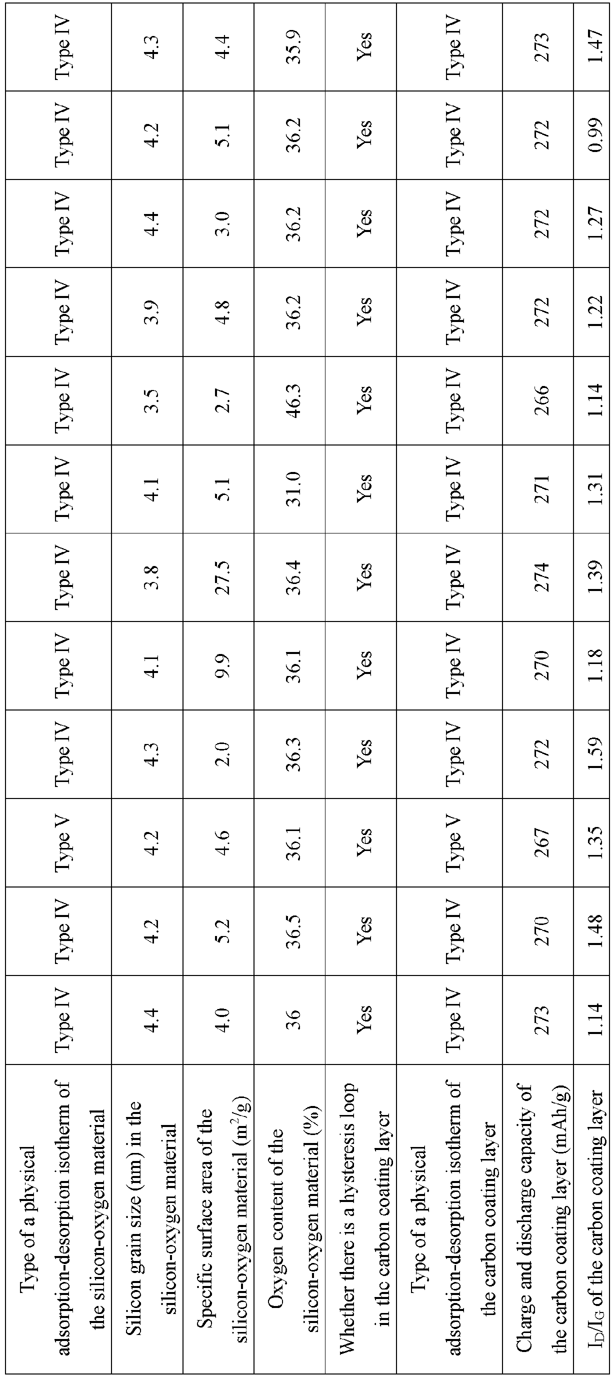

Further, the anode materials prepared in Examples 1 to 10 and Comparative Examples 1 to 2, conductive carbon black, and PAA glue are made into an anode slurry at a mass ratio of 75:15:10, applied to a copper foil, and dried to prepare an anode sheet. A lithium metal sheet is used as a counter electrode and assembled into a button cell in a glove box filled with argon. Under the current density of 0.1 C, the charge and discharge test is carried out according to a charge and discharge interval of 0.01 V to 1.5 V A first reversible specific capacity, first efficiency, and a capacity retention rate after 50 cycles of the battery are obtained from the test.

### Performance test on lithium-ion battery

1. A discharge specific capacity test is carried out on the above 12 groups of batteries on a Blue Electric CT2001A battery test system. A ratio of electricity discharged in 1 hour to a battery capacity is a first discharge specific capacity. The results are shown in Table 2.
2. A first Coulombic efficiency test is carried out on the above 12 groups of batteries on the Blue Electric CT2001A battery test system. A charge and discharge current is 0.05 C, and first Coulombic efficiency is measured. The results are shown in Table 2.
3. The above 12 groups of batteries are tested for 50 cycles on the Blue Electric CT2001A battery test system. The charge and discharge current is 0.2 C, and after 50 cycles, a battery capacity and a capacity retention rate after the cycles are calculated by testing.

Capacity retention rate after 50 cycles at 0.2 C = discharge capacity of the 50^{th} cycle/discharge capacity of the first cycle * 100%. The results are shown in Table 2.

**Table 2. Table of comparison results of performance of lithium-ion battery**

| Sample | First discharge specific capacity (mAh/g) | First Coulombic efficiency (%) | Capacity retention rate after 50 cycles (%) |
|---|---|---|---|
| S1 | 1592 | 76.3 | 93.3 |
| S2 | 1571 | 75.9 | 93.5 |
| S3 | 1588 | 76.3 | 93.2 |
| S4 | 1600 | 76.2 | 93.0 |
| S5 | 1501 | 75.5 | 93.5 |
| S6 | 1025 | 70.5 | 94.6 |
| S7 | 1453 | 81.9 | 91.8 |
| S8 | 998 | 71.4 | 96.1 |
| S9 | 1508 | 75.3 | 92.3 |
| S10 | 1599 | 76.4 | 93.4 |
| D1 | 1563 | 76.0 | 89.0 |
| D2 | 1579 | 76.0 | 90.3 |

As can be seen from Tables 1 to 2 above, in Examples 1 to 8, by preheating, the first aliphatic hydrocarbon gas can be adsorbed in pores of particles of the silicon-oxygen material, thereby filling pores of the silicon-oxygen material. The second aliphatic hydrocarbon gas is fed by intermittent pulsing, which may not lead to excessive local deposition of carbon sources. The second aliphatic hydrocarbon gas is decomposed into zero-dimensional single carbon atom radicals or one-dimensional shorter carbon chains during cracking, and mutual stacking may be denser. As shown in FIG. 2 to FIG. 3, the physical adsorption-desorption isotherm of the composite anode material in Example 1 is of a type II, and the physical adsorption-desorption isotherm of the silicon-oxygen material in Example 1 is of a type IV Moreover, the physical adsorption-desorption isotherms of the composite anode materials prepared in Examples 2 to 8 are of a type II or type III, indicating that the composite anode materials are relatively dense and has a stable structure, which can ensure integrity of particles during lithium deintercalation and intercalation of active silicon, inhibit pulverization of the particles, and effectively improve cycling stability of the battery made of the materials.

The second aliphatic hydrocarbon gas in Example 6 is excessively fed, and a weight ratio A of the second aliphatic hydrocarbon gas to the silicon-oxygen material is greater than 0.79, that is, 15ϕₐ(1-ϕₐ)=0.79, indicating that the excessive second aliphatic hydrocarbon gas may lead to excessive local deposition of carbon sources in the silicon-oxygen material, a mass ratio of the anode active material (silicon-oxygen material) may decrease, and the first discharge specific capacity and the first Coulombic efficiency of the anode material may decrease significantly.

The second aliphatic hydrocarbon gas in Example 9 is less fed, and a weight ratio A of the second aliphatic hydrocarbon gas to the silicon-oxygen material is equal to 0.079, that is, 15ϕₐ(1-ϕₐ)=0.079. As a result, fewer carbon sources are deposited on the surface of the silicon-oxygen material, conductivity of the anode material decreases, and the first discharge specific capacity, the first Coulombic efficiency, and the cycle retention rate are all lower compared to those in Example 1.

Main differences between Comparative Example 1 and Example 1 are as follows. The second aliphatic hydrocarbon gas fed during chemical vapor deposition is benzene vapor, and benzene vapor (C₆H₆) is cracked to form two-dimensional carbon rings, whose stacking is not as dense as one-dimensional short carbon chains or zero-dimensional carbon atoms formed by cracking of ethylene, a physical adsorption-desorption isotherm of the coated composite anode material after pore size analysis has a hysteresis loop, as shown in FIG. 4, the physical adsorption-desorption isotherm thereof is of a type IV, and the cycling capacity retention rate in Comparative Example 1 is lower than that in Example 1.

Main differences between Comparative Example 2 and Example 1 are as follows. The second aliphatic hydrocarbon gas is fed continuously but not fed by intermittent pulsing, leading to excessive local deposition of the carbon source on the surface of the silicon-oxygen material, which is not conducive to improving uniformity of the carbon coating layer on the surface of the silicon-oxygen material, a physical adsorption-desorption isotherm of the coated composite anode material prepared is of a type IV, and the cycling capacity retention rate in Comparative Example 2 is lower than that in Example 1, which is not conducive to improving cycling stability of the anode material.

Based on the above, the method for preparing a composite anode material provided in the present disclosure is simple and easy to operate, and a preparation process is safe and efficient; the manufacturing cost is effectively reduced, and is suitable for mass production. A prepared product is used as a battery pole piece, which is conducive to electron conduction and ion conduction during lithium intercalation and deintercalation and is conducive to improving cycling stability of the battery.

Although the present disclosure is disclosed as above with preferred Examples, the Examples are not intended to limit the claims. Any person skilled in the art can make some possible changes and modifications without departing from the concept of the present disclosure. Therefore, the protection scope of the present disclosure should be based on the scope defined by the claims of the present disclosure.

## Claims

1. A composite anode material, comprising: a silicon-oxygen material, and a carbon coating layer on a surface of the silicon-oxygen material, wherein a physical adsorption-desorption isotherm of the composite anode material is of a type II or type III, and a physical adsorption-desorption isotherm of the silicon-oxygen material is of a type IV or type V.

2. The composite anode material according to claim 1, wherein the composite anode material has a carbon characteristic peak D, a carbon characteristic peak G, and a silicon characteristic peak A in a Raman spectrum, a ratio I_{D}/I_{G} of peak intensity I_{D} of the carbon characteristic peak D to peak intensity I_{G} of the carbon characteristic peak G ranges from 0.5 to 2, and a ratio of peak intensity I_{A} of the silicon characteristic peak A to (I_{D}+I_{G}) ranges from 0.1 to 10.

3. The composite anode material according to claim 1, wherein at least one of the following conditions a to f is satisfied:
a. the silicon-oxygen material comprises SiOₓ, where 0<x<2;
b. the silicon-oxygen material further comprises a composite material of SiOₓ, the composite material of SiOₓ comprises at least one of a SiOₓ composite with SiO_{y}, a SiOₓ composite with SiO₂, a SiOₓ composite with LiₘSiOₙ, a SiOₓ composite with NaₘSiOₙ, a SiOₓ composite with KₘSiOₙ, a SiOₓ composite with MgₘSiOₙ, a SiOₓ composite with CaₘSiOₙ, a SiOₓ composite with AlₘSiOₙ, a SiOₓ composite with amorphous carbon, a SiOₓ composite with graphite, a SiOₓ composite with graphene, a SiOₓ composite with carbon nanotube, and a SiOx composite with a polymer material, where 0<y<2 and x≠y, m≥1, and n≥1;
c. a mass percentage of oxygen in the silicon-oxygen material ranges from 0.1% to 50%;
d. the silicon-oxygen material has a silicon grain size ranging from 1 nm to 100 nm;
e. the silicon-oxygen material has a specific surface area smaller than 100 m²/g; and
f. the silicon-oxygen material has a porosity ϕₐ smaller than 10%.

4. The composite anode material according to any one of claims 1 to 3, wherein at least one of the following conditions a to e is satisfied:
a. particles of the composite anode material are spherical or quasi-spherical, and have a Wadell's sphericity factor greater than 0.01;
b. the composite anode material has an average particle size ranging from 1.0 µm to 50 µm;
c. the composite anode material has a porosity smaller than 10%;
d. the composite anode material has a specific surface area ranging from 1 m²/g to 50 m²/g; and
e. a mass percentage of carbon in the composite anode material ranges from 0.1% to 50%.

5. A method for preparing a composite anode material, the method comprising the following steps:
feeding a first aliphatic hydrocarbon gas in a protective atmosphere, and preheating a silicon-oxygen material and the first aliphatic hydrocarbon gas, wherein a physical adsorption-desorption isotherm of the silicon-oxygen material is of a type IV or type V; and
feeding a second aliphatic hydrocarbon gas by intermittent pulsing, and causing the second aliphatic hydrocarbon gas to undergo chemical vapor deposition on a preheated product, to obtain the composite anode material.

6. The method according to claim 5, wherein at least one of the following conditions a to f is satisfied:
a. the silicon-oxygen material comprises SiOₓ, where 0<x<2;
b. the silicon-oxygen material further comprises a composite material of SiOₓ, the composite material of a SiOₓ comprises at least one of a SiOₓ composite with SiO_{y}, a SiOₓ composite with SiO₂, a SiOₓ composite with LiₘSiOₙ, a SiOₓ composite with NaₘSiOₙ, a SiOₓ composite with KₘSiOₙ, a SiOₓ composite with MgₘSiOₙ, a SiOₓ composite with CaₘSiOₙ, a SiOₓ composite with AlₘSiOₙ, a SiOₓ composite with amorphous carbon, a SiOₓ composite with graphite, a SiOₓ composite with graphene, a SiOₓ composite with carbon nanotube, and a SiOₓ composite with a polymer material, where 0<y<2 and x≠y, m≥1, and n≥1;
c. a mass percentage of oxygen in the silicon-oxygen material ranges from 0.1% to 50%;
d. a silicon grain size in the silicon-oxygen material ranges from 1 nm to 100 nm;
e. a specific surface area of the silicon-oxygen material is smaller than 100 m²/g; and
f. a porosity ϕₐ of the silicon-oxygen material is smaller than 10%.

7. The method according to claim 5, wherein at least one of the following conditions a to d is satisfied:
a. the protective atmosphere comprises at least one of nitrogen, helium, neon, argon, krypton, and xenon;
b. the first aliphatic hydrocarbon gas and the second aliphatic hydrocarbon gas each independently comprise at least one of acetylene, ethylene, propyne, ethane, and propylene;
c. a ratio A of a total mass of feeding of the second aliphatic hydrocarbon gas to a weight of the silicon-oxygen material satisfies the following relation: 1.5ϕₐ/(1-ϕₐ)<A<15ϕₐ/(1-ϕₐ), where ϕₐ denotes a porosity of the silicon-oxygen material; and
d. gas flow rates of the first aliphatic hydrocarbon gas and the second aliphatic hydrocarbon gas each independently range from 0.1 L/min to 5 L/min.

8. The method according to claim 5 or 7, wherein at least one of the following conditions a to e is satisfied:
a. a preheating temperature ranges from 100°C to 600°C;
b. a preheating time ranges from 0.5 h to 24 h;
c. a reaction temperature of the chemical vapor deposition ranges from 600°C to 1050°C;
d. the intermittent pulsing is at an interval of 8 s to 12 s; and
e. the intermittent pulsing has a pulse duration of 8 s to 1 min.

9. The method according to claim 5, further comprising:
cooling and sieving the composite anode material obtained by deposition so that the composite anode material has an average particle size ranging from 1.0 µm to 50 µm.

10. A lithium-ion battery, comprising a composite anode material according to any one of claims 1 to 4 or a composite anode material obtained by a preparation method according to any one of claims 5 to 9.
